# EUROPÄISCHE PATENTSCHRIFT

(11) **EP 0 948 279 B1**
(45) Veröffentlichungstag und Bekanntmachung des Hinweises auf die Patenterteilung: **09.08.2000**
(21) Anmeldenummer: 97911238.0
(22) Anmeldetag: 22.10.1997
(51) Int. Cl.: A47J 42/56, A47J 44/00

(54) **KÜCHENMASCHINE**
FOOD PROCESSOR
ROBOT CULINAIRE

(30) Priorität: 11.11.1996 DE 19646423
(43) Veröffentlichungstag der Anmeldung: 13.10.1999
(73) Patentinhaber: Braun GmbH, Kronberg (DE)
(72) Erfinder: BÖRGER, Georg, D-61449 Steinbach (DE); PFEIFFER, Bernd, D-61118 Bad Vilbel (DE)
(86) Internationale Anmeldenummer: EP9705825
(87) Internationale Veröffentlichungsnummer: WO9820785

(56) Entgegenhaltungen:
- EP-A- 0 475 470
- EP-A- 0 549 818
- DE-A- 3 933 036
- US-A- 4 373 677

## Beschreibung

Die vorliegende Erfindung bezieht sich auf eine Küchenmaschine mit einer Grundeinheit, die mindestens zwei getrennte Aufnahmen für jeweils einen Arbeitsbehälter aufweist, wobei im Bereich der Aufnahme jeweils eine rotierende Antriebswelle angeordnet ist, über die zum Bearbeiten von Nahrungsmitteln ein im Arbeitsbehälter einsetzbares Arbeitswerkzeug antreibbar ist, wobei die Antriebswellen über ein Getriebe mit einem elektrischen Motor verbunden sind und wobei neben einem von Hand betätigbaren Hauptschalter in Reihe zu diesem eine Schalteinrichtung zur Freigabe des elektrischen Stroms zu dem Motor hin vorgesehen ist, die durch eine Bewegung eines den jeweiligen Arbeitsbehälter schließenden oder öffnenden Deckels ein- oder ausschaltbar ist, indem ein am Deckel ausgebildetes Betätigungselement eine mit der Schalteinrichtung verbundene Hebelanordnung derart verschiebt, daß dabei ein Schaltkontakt betätigt wird.

Eine Küchenmaschine der vorstehend angegebenen Art ist aus der DE-C-39 33 036 bekannt. Eine solche Küchenmaschine, die auch als Mehrzweckküchenmaschine bezeichnet wird, wird überall dort eingesetzt, wo unterschiedliche Aufgaben zu übernehmen sind, wie beispielsweise Kneten, Rühren und Schlagen. Um eine solche Küchenmaschine flexibel zu gestalten, sind zwei Arbeitsbehälter - der größere zum Rühren, Zerkleinern, Kneten, der kleinere zum Mixen oder Zerkleinern - vorgesehen, denen jeweils eine gesonderte Antriebsspindel zugeordnet ist. Diese beiden Antriebsspindeln werden über einen in einem Grundgehäuse angeordneten Motor mit unterschiedlichen Umdrehungszahlen aufgrund eines unterschiedichen Übersetzungsverhältnisses zwischen der Antriebswelle und dem Motor und der jeweiligen Antriebsspindel gedreht.

Aus Sicherheitsgründen werden die Arbeitsbehälter der Küchenmaschine, wie sie vorstehend beschrieben ist, an der vorgegebenen Stelle in der Grundeinheit verriegelt, um eine sichere Antriebsverbindung zwischen dem Arbeitsbehälter und der Grundeinheit zu schaffen und um sicherzustellen, daß während des Betriebs, gerade dann, wenn eine gewisse Unwucht in dem Behälter aufgrund einer Verteilung der zu bearbeitenden Nahrungsmittel auftritt, der Arbeitsbehälter mit der Grundeinheit verbunden bleibt.Eine weitere Sicherheitsmaßnahme, die für solche Küchenmaschinen erforderlich ist, ist diejenige, daß der Motor nur dann betrieben werden darf, wenn der auf den Arbeitsbehälter aufgesetzte Deckel sicher mit diesem verschlossen ist, so daß es dem Benutzer unmöglich ist, unter geöffnetem Deckel in das laufende Arbeitswerkzeug in dem Behälter, beispielsweise ein Rührwerkzeug oder ein Schneidwerkzeug, hineinzugreifen. Bei einem Versuch, einen solchen Deckel zu öffnen, oder unter unmittelbarer Wegnahme des Deckels, wird der Motor sofort abgeschaltet.

Für die vorstehend angegebene Sicherheitsmaßnahme, die sich auf die Öffnung eines Deckels des Arbeitsbehälters, während der Motor läuft, bezieht, sieht die DE-C-39 33 036 für den jeweiligen Arbeitsbehälter bzw. dessen jeweiligem Deckel einen gesonderten Schalter vor, dessen Schaltkontakt in den Strompfad zu dem Motor hin eingesetzt ist. Unter Betätigung des jeweiligen Schalters, der dem einen oder dem anderen Deckel des jeweiligen Arbeitsbehälters zugeordnet ist, wird der Strompfad entweder unterbrochen (von dem Arbeitsbehälter abgenommener Deckel) oder geschlossen (auf den Arbeitsbehälter aufgesetzter Deckel). Jeder Schaltkontakt besitzt einen hebelartigen Stift, der in einen Betätigungsnocken, der an dem jeweiligen Arbeitsbehälter angeformt ist, eingreift. Die vorstehend beschriebene Sicherheitseinrichtung hat sich im Einsatz als gut und wirkungsvoll bewährt.

Ausgehend von dem vorstehend angegebenen Stand der Technik liegt nun der vorliegenden Erfindung die Aufgabe zugrunde, eine Sicherheitseinrichtung der beschriebenen Art derart weiterzubilden, daß sie einen konstruktiv einfachen Aufbau aufweist und darüber hinaus diese Schaltfunktionen in Bezug auf den Deckel des einen Arbeitsbehälters und auf den Deckel des anderen Arbeitsbehälters gekoppelt sind.

Diese Aufgabe wird, ausgehend von der eingangs beschriebenen, bekannten Küchenmaschine, dadurch gelöst, daß daß den Deckeln ein gemeinsamer Motor-Schaltkontakt zur Freigabe des Stroms zum Motor zugeordnet ist und daß dieser Motor-Schaltkontakt durch eine im Gehäuse gelagerte und mit zwei Abschnitten versehene Hebelanordnung betätigbar ist, wobei die Lage der Hebelanordnung zu der Lage der Deckel der Arbeitsbehälter so ausgerichtet ist, daß der eine Abschnitt der Hebelanordnung von dem Betätigungselement des einen Deckels und der andere Abschnitt der Hebelanordnung von dem Betätigungselement des anderen Deckels betätigbar ist.

Durch die erfindungsgemäße Anordnung wird nur ein einziger Schalter benötigt, der in Bezug auf seine Schaltfunktion, über eine entsprechende Hebelanordnung, sowohl dem einen Deckel als auch dem anderen Deckel der mindestens zwei Arbeitsbehälter zugeordnet ist.

In der erfindungsgemäßen Ausbildung wird der eine Schalter, der beiden Deckeln der Arbeitsbehälter zugeordnet ist, über den jeweiligen Deckel, wenn dieser in eine vorgegebene Richtung auf den Arbeitsbehälter aufgesetzt wird, so verschwenkt, daß, ausgehend von einer Grundstellung, wo der Schaltkontakt geöffnet ist und kein Strom zu dem Motor zuführt, der Schaltkontakt geschlossen wird; der Strompfad zu dem Motor hin ist dann geschlossen und das Gerät kann, unter Betätigung eines Gerätehauptschalters, eingeschaltet werden. Die Anordnung kommt nicht nur mit einem einzelnen Schalter aus, sondern auch mit einer einzelnen Hebelanordnung, um den Schalter zu betätigen, wozu die Hebelanordnung in zwei Abschnitte, sofern die Küchenmaschine nur zwei Arbeitsbehälter bzw. Deckel besitzt, unterteilt ist, die dem einen und dem anderen Deckel zugeordnet sind.

Gemäß einer bevorzugten Ausgestaltung wird der Hebelanordnung, gemäß Anspruch 2, eine neutrale Grundstellung zugeordnet, in die sie, nach einer Umkehr der Bewegungsrichtung eines Deckels, d.h. ausgehend von einer Kontaktstellung, zurückkehrt. In einer solchen Grundstellung ist die Hebelanordnung dann so ausgerichtet, daß sie über den einen oder den anderen Deckel, je nachdem, welcher Arbeitsbehälter in Betrieb genommen werden soll, betätigbar ist, um den Schalter in seine Kontaktstellung zu überführen, so daß über einen Hauptschalter der Motor eingeschaltet werden kann. Die selbsttätige Zurückführung in die Grundstellung wird durch eine auf die Hebelanordnung einwirkende Feder.

Gemäß Anspruch 3 wird die Bewegung der Hebelanordnung zurück zu der Grundstellung durch die Bewegung des Deckels vorgenommen oder zumindest durch die Bewegung des Deckels zu seiner Lösestellung hin eingeleitet, das bedeutet, die Hebelanordnung wird nicht nur in die Kontaktstellung durch den jeweiligen Deckel überführt, sondern auch wieder durch den jeweiligen Deckel in die Grundstellung zurückgeführt, wenn dieser in die Lösestellung gebracht wird.
Um den Strompfad mittels des Schalters, der der Hebelanordnung zugeordnet ist, definiert zu schließen, sollte gemäß Anspruch 4 die Hebelanordnung zumindest einen Schaltnocken aufweisen, der den Motor-Schaltkontakt des Schalters öffnet oder schließt. Dieser Schaltnocken kann so in Bezug auf die Dreh- oder Schwenkbewegung der Hebelanordnung ausgebildet oder konfiguriert werden, daß der Motor-Schaltkontakt erst dann geschlossen wird, wenn der Deckel, der die Hebelanordnung betätigt, zu einer Schließstellung hin überführt ist, in der er sicher und nicht weiter durch den Benutzer manipulierbar an dem Arbeitsbehälter angeordnet bzw. verriegelt ist.

Gemäß Anspruch 5 sollte jeder Deckel einen stiftartigen Vorsprung aufweisen, der in den ihm zugeordneten Hebelarm, oder einen Abschnitt der Hebelanordnung, eingreift. Mit einem solchen stiftartigen Vorsprung kann gewährleistet werden, daß die Hebelanordnung nur dann betätigbar ist - um den Motor-Schaltkontakt zu schließen - wenn der Deckel richtig auf dem Arbeitsbehälter positioniert ist und zu seiner Verriegelungsstellung hin überführt wird, da ansonsten, d.h. bei falscher Anordnung des Deckels auf dem Arbeitsbehälter, der stiftartige Vorsprung des Deckels nicht mit der Hebelanordnung in Eingriff gelangt.

Darüber hinaus kann für einen definierten Eingriff des stiftartigen Vorsprungs in den Hebelarm gemäß Anspruch 7 an dem Ende jedes Hebelarms ein gabel- oder klauenförmiger Abschnitt ausgebildet sein; ein solcher Endabschnitt könnte dann so dimensioniert werden, daß gemäß Anspruch 8 die Zinken oder Klauen in der Kontaktstellung an dem stiftartigen Vorsprung beidseitig anliegen, so daß Hebelarm und Stift ineinandergreifen und auch unter einer äußeren Krafteinwirkung nicht außer Eingriff gebracht werden können, es sei denn, der Deckel wird wieder vorschriftsmäßig zu seiner Lösestellung hin überführt. Weiterhin sollte bevorzugt der zu der Kontaktstellung führende Gabelzinken bzw. Klauenarm länger ausgebildet sein als der andere Gabelzinkeln bzw. Klauenarm, so daß ein ausreichender Freiraum für den Stift gegeben ist, um in der Lösestellung aus den Klauen oder Anken des Hebelarms herauszutreten, während andererseits in der Betriebsstellung der Stift, wie vorstehend erwähnt, sicher an dem Hebelarm zur Anlage gelangt und den Hebelarm in der Schließstellung für den Motor-Schaltkontakt hält.

Es kann auftreten, und zwar gerade dann, wenn in dem Arbeitsbehälter nur geringe Mengen oder dünnflüssige Nahrungsmittel bearbeitet wurden, daß, nach Abschalten des Motors und/oder nach Öffnen des Deckels und damit Zurückführen der Hebelanordnung der Motor zu lange nachläuft. In einem solchen Fall würde die Gefahr bestehen, daß dann, wenn der Benutzer unmittelbar danach den Deckel von dem Arbeitsbehälter abnimmt, sich das Arbeitswerkzeug, beispielsweise ein Schneidwerkzeug, noch in Drehung befindet. Für einen solchen Fall kann es von Vorteil sein, daß ein Motorbremsstrom-Schaltkontakt (Anspruch 9) vorgesehen wird. Dieser Motorbremsstrom-Schaltkontakt ist ebenfalls der Hebelanordnung zugeordnet und wird über die Bewegung der Hebelanordnung betätigt. Ein solcher Motorbremsstrom-Schaltkontakt ist in der Grundstellung der Hebelanordnung geschlossen. Der Schaltkontakt gibt einen Bremsstrom in der Wicklung des Motors frei, der dann einer Drehung des Motors entgegenwirkt und diesen bremst. Hierdurch kommt das sich in dem Arbeitsbehälter drehende Arbeitswerkzeug schnell zum Stillstand. Um das Abbremsen des Motors zu einem sehr frühen Zeitpunkt einzuleiten, wird der Motorbremsstrom-Schaltkontakt geschlossen, unmittelbar nachdem sich der Motor-Schaltkontakt öffnet.

Damit auch dann, wenn diese Hebelanordnung aus irgendeinem Grund in die Betriebsstellung verschwenkt werden sollte, in der der Motor-Schaltkontakt geschlossen ist, wieder zu ihrer Grundstellung zurückkehrt, sollte der Schaltkontakt als Feder ausgebildet sein derart, daß dadurch die Rückstellung der Hebelanordnung in die Grundstellung unterstützt wird. Es kann aber auch zusätzlich ein Federelement an der Hebelanordnung angebracht werden, wie bereits erwähnt, das diese Zurückführung der Hebelanordnung in die Grundstellung unterstützt.

Weitere Einzelheiten und Merkmale der vorliegenden Erfindung ergeben sich aus der nachfolgenden Beschreibung eines Ausführungsbeispiels anhand der Zeichnung.

In der Zeichnung zeigt:
- Fig. 1: eine perspektivische Ansieht einer Küchenmaschine mit zwei Arbeitsbehältern, wobei in einem mittleren Gehäuseabsehnitt eine Sicherheitseinrichtung in Form einer Hebelanordnung, die den beiden Arbeitsbehältern zugeordnet ist, angedeutet ist, und
- Fig. 2: eine vergrößerte Darstellung nur der Hebelanordnung mit Teilen der Arbeitsbehälter in einer Draufsicht, sowie eine schematische Darstellung der Stromführung.

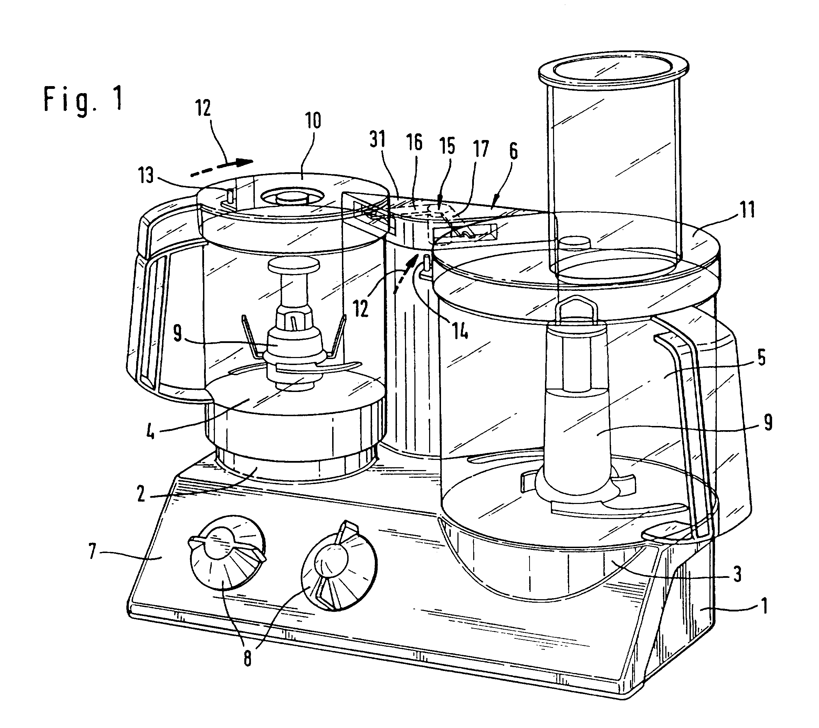

Die Küchenmaschine, wie sie in Fig. 1 gezeigt ist, weist eine Grundeinheit 1 mit zwei Aufnahmen 2, 3 für jeweils einen Arbeitsbehälter 4, 5 auf. An dem hinteren Gehäusebereich, zwischen den beiden Aufnahmen 2, 3, bzw. den jeweiligen Arbeitsbehältern 4, 5, erstreckt sich von der Grundeinheit 1 ein turmartiges Gehäuse 6 nach oben. Dieses turmartige Gehäuse 6 kann unter anderem dazu vorgesehen sein, einen elektrischen Motor aufzunehmen.

An der Grundeinheit 1 sind an einer vorderen, schräg verlaufenden Bedienungsfläche 7 zwei Drehschalter 8 angeordnet, wobei der eine als Hauptschalter dazu dient, den elektrischen Motor von Hand ein- oder auszuschalten.

In den jeweiligen Behältern 4, 5 sind Arbeitswerkzeuge 9 unterschiedlicher Ausführung auf eine nicht näher zu sehende Antriebsspindel aufgesetzt, die über einem in der unteren Gehäuseeinheit 1 angeordneten Antriebszug mit einem elektrischen Motor (nicht dargestellt) in antriebsmäßiger Verbindung steht.

Um mit der gezeigten Küchenmaschine Nahrungsmittel zu bearbeiten, wird der linke Arbeitsbehälter 4 oder der rechte Arbeitsbehälter 5 auf die entsprechende Aufnahme 2 oder 3 aufgesetzt. Die beiden Arbeitsbehälter 4, 5 besitzen ein unterschiedliches Füllvolumen, darüberhinaus können deren Arbeitswerkzeuge 9 in Bezug auf die Drehzahl des Motors unterschiedlich unter- oder übersetzt sein, je nach erforderlichem Arbeitsvorgang.

Der jeweilige Behälter 4 oder 5 wird dann in der zugehörigen Aufnahme 2 oder 3 verriegelt und mit einem Deckel 10, 11 verschlossen. Der jeweilge Deckel 10, 11 wird unabhängig von dem ihm zugeordneten Behälter 4, 5 in eine Verriegelungsstellung gemäß der Drehrichtung der jeweiligen Pfeile 12 gedreht. Die Drehung des Deckels 10 oder 11 kann aber auch zusammen mit dem Arbeitsbehäler oder 5 erfolgen, falls der Arbeitsbehälter 4, 5 mit einem bereits darauf verriegelten Deckel 10, 11 in die jeweilige Aufnahme 2, 3 eingesetzt wird.

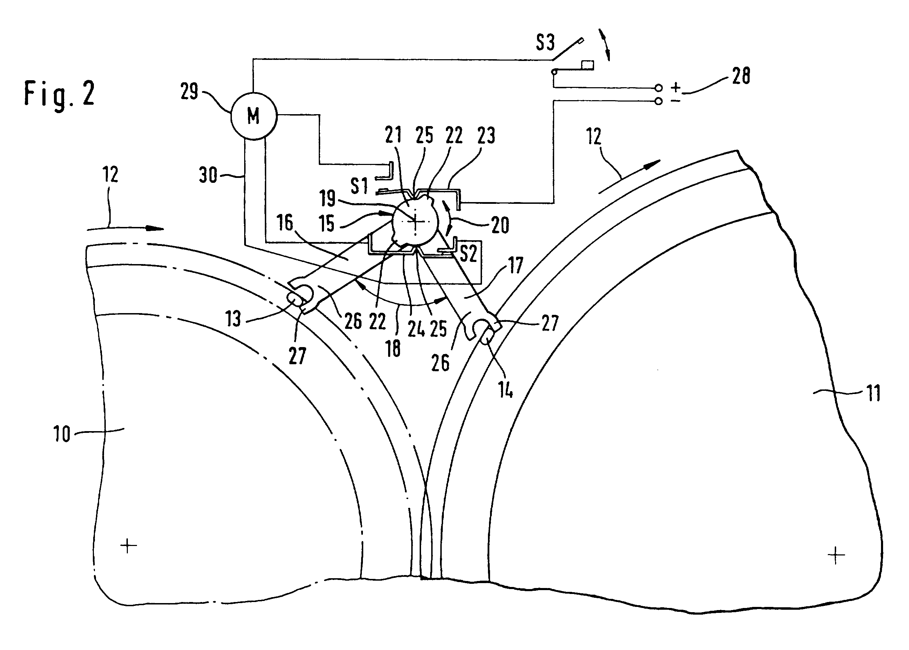

Wie in Fig. 1 zu sehen und detaillierter in Fig. 2 dargestellt ist, trägt jeder Deckel 10, 11 an seinem äußeren Randbereich, an einer definierten Stelle, einen senkrecht nach oben vorstehenden Stift 13, 14. Diese beiden Stifte 13, 14 sind einer Hebelanordnung, die allgemein mit dem Bezugszeichen 15 bezeichnet ist, zugeordnet. Die Hebelanordnung 15 umfaßt zwei Abschnitte in Form von zwei Hebelarmen 16, 17, die in Bezug auf ihre Längserstreckung, unter einem definierten Winkel 18 ausgerichtet sind.

Die Hebelanordnung 15 ist um eine Schwenkachse 19 in Richtung des Doppelpfeils 20 schwenkbar. Weiterhin ist im Bereich der Schwenkachse 19 eine Nockenscheibe 21 fest mit den Hebelarmen 16, 17 befestigt, d.h., sie besitzt eine definiert festgelegte Stellung in Bezug auf die beiden Hebelarme 16, 17. An dieser Nockenscheibe 21 sind zwei Schaltnocken 22 ausgebildet, wobei der eine, in Fig. 2 der obere Schaltnocken 22, einem Motor-Schaltkontakt 23 zugeordnet ist, während der untere Schaltnocken 22 einem Motorbremsstrom-Schaltkontakt 24 zugeordnet ist. Unter Drehung der Hebelanordnung 15 und damit der Nockenscheibe 21 in Richtung des Doppelpfeils 20 greifen die beiden Schaltnocken 22 jeweils in Schaltkontaktvorsprünge 25 ein, so daß der jeweilige Schaltkontakt 23 oder 24 bewegt wird, um entweder einen Schalter S1 für den Motorbetriebsstrom zu schließen und einen Schalter S2 für einen Motorbremssstrom zu öffnen.

Die Betriebsweise der Sicherheitseinrichtung, die durch diesen vorstehend beschriebenen Aufbau mit der Hebelanordnung 15 als wesentlicher Bestandteil gebildet wird, ist wie folgt.

Die beiden Hebelarme 16, 17 sind so dimensioniert und ausgelegt, daß sie, ausgehend von einer Grundstellung, die in Fig. 2 dargestellt ist, mit dem jeweiligen Stift 13 oder 14 in Eingriff treten. Hierzu ist an dem Ende jedes Hebelarms 16, 17 eine Klaue 26 ausgebildet. Durch den in Drehrichtung 12 hinteren längeren Klauenarm 27 wird sichergestellt, daß der jeweilige Stift 13 oder 14 in der Klaue 26 in Schließrichtung sicher zur Anlage kommt. Unter weiterer Drehung des jeweiligen Deckels 10 oder 11 in Richtung des Pfeils 12, ausgehend von der in Fig. 2 gezeigten Grundstellung, wird der Hebelarm 16 oder 17 verschwenkt und die Nockenscheibe 21 in Uhrzeigerrichtung gedreht.

In einer Endstellung des Deckels 10, 11 wird der Schalter S1 geschlossen und der Schalter S2 geöffnet Mit dem Schließen des Schalters S1 ist der eine Strompfad von der Stromquelle 28 zu dem Motor 29 hin geschlossen, so daß dann, wenn der Betriebsschalter S3, der in einem der Drehschalter 8, die in Fig. 1 zu sehen sind, eingebaut ist, geschlossen wird, der Motor 29 mit Strom versorgt wird und anläuft. Falls der Deckel 10 oder 11, der mit dem entsprechenden Hebelarm 16 oder 17 in Eingriff gebracht worden ist, und den Schalter S1 geschlossen hat, unter Betrieb des Geräts von der Verriegelungsstellung aus gesehen wieder entriegelt wird, wird der jeweilige Hebelarm 16 oder 17 in Gegenuhrzeigerrichtung über den Stift 13 oder 14 geschwenkt, so daß sich die Nockenscheibe 21 in Uhrzeigerrichtung dreht. Der Nocken 22 kommt dann aus dem Eingriff mit dem Schaltkontaktvorsprung 25, so daß der Schalter S1 geöffnet und damit die Stromzufuhr zu dem Motor 29 unterbrochen wird.

Gleichzeitig wird mit einem Drehen der Nockenscheibe 21 in Uhrzeigerrichtung der untere Schaltnocken 22 aus dem Schaltkontaktvorsprung 25 des Motorbremsstrom-Schaltkontakt außer Eingriff gebracht und der Schalter S2 unterbrochen, der einen Stromkreis - durch die beiden Leitungen 30 angedeutet - zu dem Motor 29 hin schließt, um den Motor abzubremsen. In der Grundstellung ist dann die Küchenmaschine nicht betreibbar, da der Schater S1 geöffnet ist, auch dann nicht, wenn der Schalter S3, d.h. der Hauptschalter, geschlossen wird.

Während in Fig. 2 die Deckel 10, 11 beider Arbeitsbehälter 4, 5 angedeutet sind, um zu verdeutlichen, daß die jeweiligen Stift 13, 14 den Hebelarmen 16, 17 der Hebelanordnung 15 zugeordnet sind und in die Klauen 26 eingreifen können, sollte verständlich werden, daß üblicherweise Maßnahmen ergriffen sind, daß nur entweder der linke Arbeitsbehälter 4 oder der rechte Arbeitsbehälter 5 auf die Grundeinheit 1 aufgesetzt und in Betrieb genommen werden können.

Wie in Fig. 1 zu erkennen ist, ist die Hebelanordnung 15 am oberen Ende des turmartigen Gehäuses 6 unterhalb eines Gehäusedeckels 31 angeordnet und die Endabschnitte der Hebelarme 16, 17, d.h., die beiden Klauen 26 stehen aus Schlitzen, die nicht näher dargestellt sind, hervor, um mit den Stiften 13, 14 der Deckel 10, 11 in Eingrifftreten zu können.

Wie aufgrund der vorstehenden Beschreibung zu erkennen ist, ist mit dieser Hebelanordnung 15 ein sehr einfacher, aber dennoch wirkungsvoller Aufbau erzielt, um die Küchenmaschine mit einer hohen Betriebssicherheit auszustatten dahingehend, daß die Küchenmaschine nur dann betrieben werden kann, wenn der jeweilige Arbeitsbehälter 4, 5 und dessen jeweiliger Deckel 10, 11 ordnungsgemäß positioniert sind, so daß für den Benutzer keine Möglichkeit besteht, unter laufendem Arbeitswerkzeug 9 in einen geöffneten Arbeitsbehälter 4, 5 hineinzugreifen.

## Patentansprüche

1. Küchenmaschine mit einer Grundeinheit (1, 6), die mindestens zwei getrennte Aufnahmen (2, 3) für jeweils einen Arbeitsbehälter (4, 5) aufweist, wobei im Bereich der Aufnahme (2, 3) jeweils eine rotierende Antriebswelle angeordnet ist, über die zum Bearbeiten von Nahrungsmitteln ein im Arbeitsbehälter (4, 5) einsetzbares Arbeitswerkzeug (9) antreibbar ist, wobei die Antriebswellen über ein Getriebe mit einem elektrischen Motor (29) verbunden sind und wobei neben einem von Hand betätigbaren Hauptschalter (8; S3) in Reihe zu diesem eine Schalteinrichtung (S1) zur Freigabe des elektrischen Stroms zu dem Motor (29) hin vorgesehen ist, die durch eine Bewegung eines den jeweiligen Arbeitsbehälter (2, 3) schließenden oder öffnenden Deckels (10, 11) ein- oder ausschaltbar ist, indem ein am Deckel (10, 11) ausgebildetes Betätigungselement (13, 14) eine mit der Schalteinrichtung (S1) verbundene Hebelanordnung (15) derart verschiebt, daß dabei ein Schaltkontakt (23) betätigt wird,
**dadurch gekennzeichnet,**
daß den Deckeln (10, 11) ein gemeinsamer Motor-Schaltkontakt (23; S1) zur Freigabe des Stroms zum Motor (29) zugeordnet ist und daß dieser Motor-Schaltkontakt (23;S1) durch eine im Gehause (6) gelagerte und mit zwei Abschnitten (16, 17) versehene Hebelanordnung (15) betätigbar ist, wobei die Lage der Hebelanordnung (15) zu der Lage der Deckel (10, 11) der Arbeitsbehälter (2, 3) so ausgerichtet ist, daß der eine Abschnitt (16) der Hebelanordnung (15) von dem Betätigungselement (13) des einen Deckels (10) und der andere Abschnitt (17) der Hebelanordnung (15) von dem Betätigungselement (14) des anderen Deckels (11) betätigbar ist.

2. Küchenmaschine nach Anspruch 1,
**dadurch gekennzeichnet,**
daß die Hebelanordnung (15) beim Öffnen des Behälters (4, 5)durch den Deckel (10, 11) selbsttätig durch die Kraft einer auf die Hebelanordnung (15) einwirkenden Feder (23, 24) in seine Grundstellung zurückgestellt wird.

3. Küchenmaschine nach Anspruch 2,
**dadurch gekennzeichnet,**
daß die Rückstellung der Hebelanordnung (15) durch die Bewegung des Deckels (10, 11) zumindest eingeleitet wird.

4. Küchenmaschine nach Anspruch 1,
**dadurch gekennzeichnet,**
daß die Hebelanordnung (15) zumindest mit einem Schaltnocken (22) verbunden ist, der den Motor-Schaltkontakt (23; S1) öffnet oder schließt.

5. Küchenmaschine nach Anspruch 1,
**dadurch gekennzeichnet,**
daß jeder Deckel (10, 11) einen stiftartigen Vorsprung (13, 14) aufweist, der in einen ihm zugeordneten Hebelarm (16, 17) der Hebelanordnung (15) eingreift.

6. Küchenmaschine nach Anspruch 5,
**dadurch gekennzeichnet,**
daß der stiftartige Vorsprung (13, 14) in einen gabel- oder klauenförmigen Endabschnitt des Hebelarms (16, 17) eingreift.

7. Küchenmaschine nach Anspruch 6,
**dadurch gekennzeichnet,**
daß die Zinken der Gabel bzw. Arme (27) der Klauen in der Kontaktstellung an dem stiftartigen Vorsprung (13, 14) beidseitig anliegen.

8. Küchenmaschine nach Anspruch 7,
**dadurch gekennzeichnet,**
daß der zu der Schließstellung des Motor-Schaltkontakts (23; S1) hin voranführende Gabelzinken bzw. Klauenarm (27) länger ausgebildet ist als der andere Gabelzinken bzw. Klauenarm.

9. Küchenmaschine nach Anspruch 1,
**dadurch gekennzeichnet,**
daß der Hebelanordnung (15) ein Motorbremsstrom-Schaltkontakt (24; S2) zugeordnet ist, der über die Bewegung der Hebelanordnung (15) betätigbar ist, der in der Grundstellung der Hebelanordnung (15) geschlossen ist und der einen Bremsstromkreis zu der Wicklung des Motors (29) schließt.

10. Küchenmaschine nach Anspruch 9,
**dadurch gekennzeichnet,**
daß sich der Motorbremsstrom-Schaltkontakt (24, S2) schließt, unmittelbar nachdem sich der Motor-Schaltkontakt (23; S1) öffnet.

## Claims

1. A food processor, comprising a base unit (1, 6) having at least two separate mounts (2, 3) for one processing container (4, 5) each, with a respective rotary drive shaft being disposed in the area of each mount (2, 3), which drive shaft is adapted to drive a processing tool (9) insertable into the processing container (4, 5) for the processing of food materials, said drive shafts being connected to an electric motor (29) by a transmission mechanism, and with a switch device (S1) being provided in addition to and in series with a manually actuatable main switch (8; S3) to enable electric current to be released to the motor (29), said switch device being adapted to be turned on or off by movement of a lid (10, 11) which closes or opens the respective processing container (2, 3), which is accomplished in that an actuating element (13, 14) formed on the lid (10, 11) displaces a lever arrangement (15) connected with the switch device (S1) in such fashion as to cause actuation of a switching contact (23),
**characterized in that** the lids (10, 11) are assigned a common motor switching contact (23; S1) for the release of electric current to the motor (29), and that said motor switching contact (23; S1) is actuatable by a lever arrangement (15) mounted in the housing (6) and comprising two sections (16, 17), with the position of the lever arrangement (15) relative to the position of the lids (10, 11) of the processing containers (2, 3) being oriented such that the one section (16) of the lever arrangement (15) is actuatable by the actuating element (13) of the one lid (10), while the other section (17) of the lever arrangement (15) is actuatable by the actuating element (14) of the other lid (11).

2. The food processor as claimed in claim 1,
**characterized in that** when the container (4, 5) is opened the lever arrangement (15) is automatically returned to its initial position by the lid (10, 11), using the force of a spring (23, 24) acting on the lever arrangement (15) .

3. The food processor as claimed in claim 2,
**characterized in that** the return motion of the lever arrangement (15) is at least initiated by the movement of the lid (10, 11).

4. The food processor as claimed in claim 1,
**characterized in that** the lever arrangement (15) is connected with at least one control cam (22) that opens or closes the motor switching contact(23; S1).

5. The food processor as claimed in claim 1,
**characterized in that** each lid (10, 11) has a pin-type protrusion (13, 14) engaging in an associated lever arm (16, 17) of the lever arrangement (15).

6. The food processor as claimed in claim 5,
**characterized in that** the pin-type protrusion (13, 14) engages within a fork or claw shaped end section end of the lever arm (16, 17).

7. The food processor as claimed in claim 6,
**characterized in that** the tines of the fork or the claw members (27) of the claws engage the pin-type protrusion (13, 14) on either side when in the contact making position.

8. The food processor as claimed in claim 7,
**characterized in that** the tine of the fork or the claw member (27) producing the contact making position of the motor switching contact (23; S1) is of greater length than the other tine of the fork or claw member.

9. The food processor as claimed in claim 1,
**characterized in that** a motor braking current switching contact (24; S2) is associated with the lever arrangement (15) and actuatable by the movement of the lever arrangement (15), said contact being closed with the lever arrangement (15) in the initial position and closing a braking circuit to the winding of the motor (29).

10. The food processor as claimed in claim 9,
**characterized in that** the motor braking current switching contact (24, S2) closes immediately after the motor switching contact (23; S1) opens.

## Revendications

1. Robot de cuisine comportant une unité de base (1, 6) qui présente au moins deux moyens de réception (2, 3) séparés pour un récipient de travail respectif (4, 5), un arbre d'entraînement respectif étant agencé dans la région du moyen de réception (2, 3), au moyen duquel est susceptible d'être entraîné un outil de travail (9) utilisable dans le récipient de travail (4, 5) pour travailler des aliments, les arbres d'entraînement étant reliés via un engrenage à un moteur électrique (29), et en plus d'un interrupteur principal (8 ; S3) actionnable à la main il est prévu un commutateur (S1) monté en série par rapport à celui-ci pour libérer le courant électrique vers le moteur (29), ledit commutateur pouvant être mis en marche ou à l'arrêt par un mouvement d'un couvercle (10, 11) fermant ou ouvrant le récipient de travail (2, 3) respectif par le fait qu'un élément d'actionnement (13, 14) réalisé sur le couvercle (10, 11) déplace un système de levier (15) relié au commutateur (S1) de telle sorte qu'un contact de commutation (23) sera alors actionné,
caractérisé en ce qu'aux couvercles (10, 11) est associé un contact de commutation de moteur (23 ; S1) commun pour libérer le courant vers le moteur (29) et en ce que ce contact de commutation de moteur (23 ; S1) est susceptible d'être actionné par un système de levier (15) monté dans le boîtier (6) et pourvu de deux tronçons (16, 17), la position du système de levier (15) étant orientée par rapport à la position du couvercle (10, 11) des récipients de travail (2, 3) de telle façon que l'un des tronçons (16) du système de levier (15) est susceptible d'être actionné par l'élément d'actionnement (13) de l'un des couvercles (10) et que l'autre tronçon (17) du système de levier (15) est susceptible d'être actionné par l'élément d'actionnement (14) de l'autre couvercle (11).

2. Robot de cuisine selon la revendication 1, caractérisé en ce que lorsqu'on ouvre le récipient (4, 5) par le couvercle (10, 11), le système de levier (15) est automatiquement remis dans sa position de base par la force d'un ressort (23, 24) agissant sur le système de levier (15).

3. Robot de cuisine selon la revendication 2, caractérisé en ce que le retour du système de levier (15) est au moins déclenché par le mouvement du couvercle (10, 11).

4. Robot de cuisine selon la revendication 1, caractérisé en ce que le système de levier (15) est au moins relié à une came de commutation (22) qui ouvre ou ferme le contact de commutation de moteur (23 ; S1).

5. Robot de cuisine selon la revendication 1, caractérisé en ce que chaque couvercle (10, 11) présente une saillie (13, 14) en forme de goupille qui s'engage dans un bras de levier (16, 17), qui lui est associé, du système de levier (15).

6. Robot de cuisine selon la revendication 5, caractérisé en ce que la saillie (13, 14) en forme de goupille s'engage dans un tronçon d'extrémité en forme de fourche ou de griffe du bras de levier (16, 17).

7. Robot de cuisine selon la revendication 6, caractérisé en ce que les dents des fourches ou les bras (27) des griffes sont en appui de chaque côté de la saillie (13, 14) en forme de goupille dans la position de contact.

8. Robot de cuisine selon la revendication 7, caractérisé en ce que la dent de fourche ou le bras de griffe (27) la plus proche de la position de fermeture de contact de commutation de moteur (23 ; S1) est réalisé(e) plus long(ue) que l'autre dent de fourche ou bras de griffe, respectivement.

9. Robot de cuisine selon la revendication 1, caractérisé en ce qu'au système de levier (15) est associé un contact de commutation de courant de freinage du moteur (24 ; S2) qui est susceptible d'être actionné par le mouvement du système de levier (15), qui est fermé dans la position de base du système de levier (15) et qui ferme un circuit de courant de freinage vers l'enroulement du moteur (29).

10. Robot de cuisine selon la revendication 9, caractérisé en ce que le contact de commutation de courant de freinage du moteur (24 ; S2) se ferme immédiatement après que le contact de commutation de courant de moteur (23 ; S1) s'ouvre.
